# EUROPEAN PATENT SPECIFICATION

(11) **EP 4 275 799 B1**
(45) Date of publication and mention of the grant of the patent: **28.05.2025**
(21) Application number: 22898893.7
(22) Date of filing: 04.11.2022
(51) Int. Cl.: B05C 5/02, H01M 4/04

(54) **SLOT DIE COATER**
SCHLITZDÜSENBESCHICHTER
DISPOSITIF D?ENDUCTION À FILIÈRE À FENTE

(30) Priority: 26.11.2021 KR 20210166218; 03.06.2022 KR 20220068483
(43) Date of publication of application: 15.11.2023
(73) Proprietor: LG Energy Solution, Ltd., Seoul 07335 (KR)
(72) Inventor: JO, Young-Joon, Daejeon 34122 (KR); YOU, Seong-Jae, Daejeon 34122 (KR); LEE, Taek-Soo, Daejeon 34122 (KR); CHOI, Min-Hyuck, Daejeon 34122 (KR); JEON, Shin-Wook, Daejeon 34122 (KR); CHOY, Sang-Hoon, Daejeon 34122 (KR)
(74) Representative: Plasseraud IP
(86) International application number: PCT/KR2022/017292
(87) International publication number: WO 2023/096211

(56) References cited:
- WO-A1-2015/009033
- JP-A- 2006 102 598
- JP-A- 2011 240 249
- JP-A- 2016 019 975
- KR-B1- 101 952 598
- US-A- 4 259 055

## Description

### TECHNICAL FIELD

The present disclosure relates to a slot die coater, and more particularly, to a slot die coater including an improved shim plate. The present application claims priority to Korean Patent Application No. 10-2021-0166218 filed on November 26, 2021 in the Republic of Korea and Korean Patent Application No. 10-2022-0068483 filed on June 3, 2022 in the Republic of Korea.

### BACKGROUND ART

With the increasing technology development and the growing demand for mobile devices, the demand for secondary batteries as an energy source is rapidly increasing, and a secondary battery essentially includes an electrode assembly which is a power generation element. The electrode assembly includes a positive electrode, a separator and a negative electrode stacked at least once, and the positive electrode and the negative electrode are manufactured by coating and drying a positive electrode active material slurry and a negative electrode active material slurry on a current collector made of an aluminum foil and a current collector made of a copper foil, respectively. In general, the secondary battery includes lithium containing cobalt oxide (LiCoO₂) of layered crystal structure, lithium containing manganese oxide, for example, LiMnO₂ of layered crystal structure and LiMn₂O₄ of spinel crystal structure, and lithium containing nickel oxide (LiNiO₂) for the positive electrode active material. Additionally, a carbon based material is primarily used for the negative electrode active material, and recently, with the growing demand for high energy lithium secondary batteries, the carbon based material may be mixed with a silicon based material or a silicon oxide based material having the effective capacity that is at least 10 times larger than the carbon based material. For the uniform charge/discharge characteristics of the secondary battery, it is necessary to uniformly coat the positive electrode active material slurry and the negative electrode active material slurry on the current collector, and slot die coaters have been used to do so.

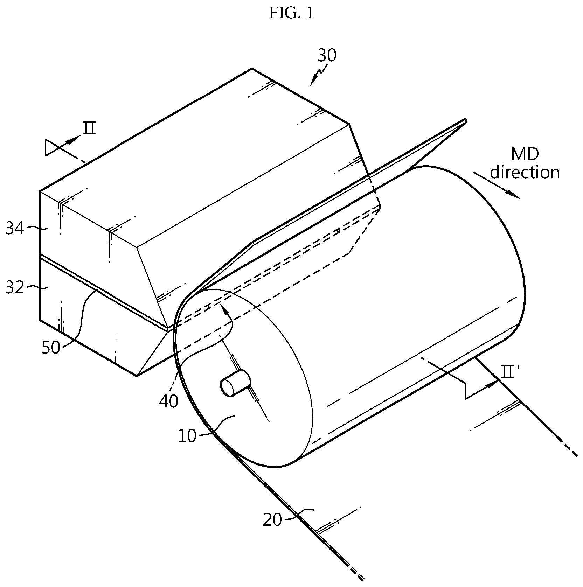

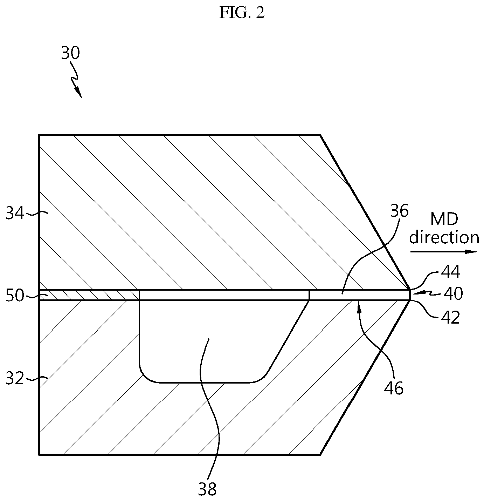

FIG. 1 shows an example of a coating method using a conventional slot die coater. FIG. 2 is a cross-sectional view of FIG. 1, taken along the line II-II', showing the slot die coater along the MD direction (the movement direction of the current collector).

Referring to FIGS. 1 and 2, an electrode manufacturing method using the slot die coater 30 includes coating an electrode active material slurry delivered from the slot die coater 30 on a current collector 20 transported by a coating roll 10. The electrode active material slurry delivered from the slot die coater 30 is coated over one surface of the current collector 20 to form an electrode active material layer. The slot die coater 30 includes two die blocks 32, 34 and has a slot 36 between the two die blocks 32, 34. A manifold 38 accommodates the electrode active material slurry supplied from a feeder (not shown), and the electrode active material slurry is delivered through the exit port 40 in communication with the slot 36 to form the electrode active material layer. The reference numbers 42 and 44 indicate the die lips at the front ends of the die blocks 32, 34, respectively, and the reference number 46 is a land portion.

The coating width of the electrode active material layer coated on the current collector 20 is determined by the width of the slot 36. When it is necessary to change the coating width, various coating widths may be realized by changing a shim plate 50 that determines the internal space of the manifold 38 and the width of the slot 36.

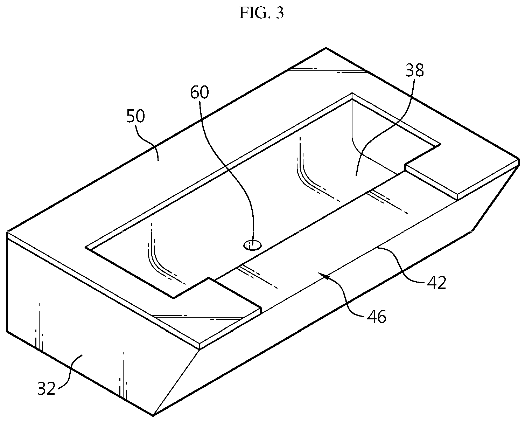

FIG. 3 is a diagram showing the conventional shim plate.

The shim plate 50 is disposed on the manifold 38 in the die block 32. The shim plate 50 is a sheet-shaped member having a thickness defining a slot gap. Typically, as shown in FIG. 3, the end of the shim plate 50 is aligned with the die lip 42. The reference number 60 is an injection port through which the electrode active material slurry is supplied from the feeder, and in most cases, the injection port is formed at the bottom center of the manifold 38.

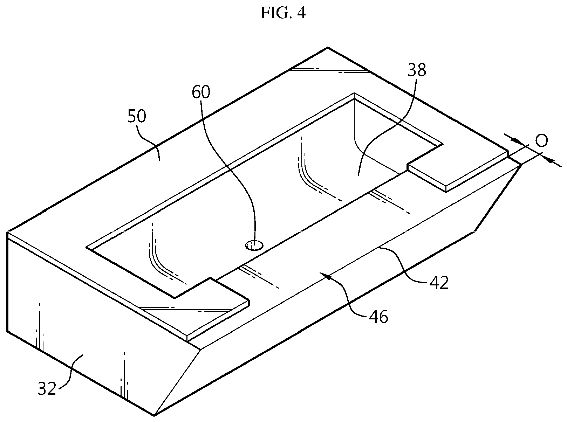

FIG. 4 is a diagram showing the conventional shim plate offset.

The shim offset O control is performed to move back the end of the shim plate 50 from the die lip 42 at the front end of the die block 32. The shim offset O control is essential for the coating width process capability in view of the slurry delivery pressure or the like, but it is difficult to precisely control the shim offset O and ensure reproducibility.

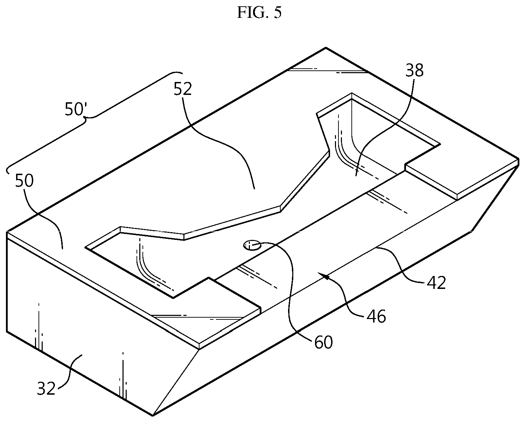

FIG. 5 is a diagram showing the conventional shim.

As a variation of the shim plate 50 of FIG. 3, a shim 50' controls the widthwise loading profile by blocking the passage to the land portion 46 from the manifold 38 of the die block 32. The shim 50' further includes a portion 52 at the central area of the shim plate 50. However, there is a limitation on loading profile control by the conventional shim 50'.

Since it is difficult to change the shape of the manifold 38 of the die block 32 once it is initially formed, it will be desirable to solve the problems such as shim offset control or loading profile control by improving the shim plate 50.

US 4 259 055 A discloses a coating apparatus.

### DISCLOSURE

### Technical Problem

The present disclosure is designed to solve the above-described problem, and therefore the present disclosure is directed to providing a slot die coater including an improved shim plate.

However, the technical problem to be solved by the present disclosure is not limited to the above-described problems, and these and other problems will be clearly understood by those skilled in the art from the following description.

### Technical Solution

The invention is described by the claims.

To solve the above-described problem, a slot die coater of the present invention includes a lower die block and an upper die block; a shim plate interposed between the lower die block and the upper die block to form a slot therebetween; and a manifold disposed in the lower die block, the manifold accommodating a coating solution, wherein the coating solution is delivered and coated on a substrate through an exit port in communication with the slot, and wherein the shim plate includes a plate-shaped member having an open portion which is cut in at least an area to determine a coating width of a coating layer coated on the substrate, and a structure protruding from the plate-shaped member and inserted into the manifold.

The structure may be integral to the plate-shaped member.

At rear of the manifold and in front of the manifold, a lower surface of the upper die block and an upper surface of the shim plate may be coupled to each other without a gap, and an upper surface of the lower die block and a lower surface of the shim plate may be coupled to each other without a gap.

An upper surface of the shim plate may be flat and the structure may protrude in part of a lower surface of the shim plate.

The plate-shaped member may include a first part which serves as a base and at least two second parts extended from the first part, and the second part may be connected to a same side of the first part and extended in a same direction.

The structure may be a side structure which is inserted into two ends of the manifold in an area of contact with the manifold at two ends of the plate-shaped member to ensure positional reproducibility of the shim plate.

The side structure may have a same shape as a cross-sectional shape of the manifold to fit into the manifold including a bottom of the manifold.

In example, the plate-shaped member may include a first part which serves as a base and at least two second parts extended from the first part, the second part may be connected to a same side of the first part and extended in a same direction, and the side structure may be extended and protruded downward from an inner sidewall of the second part close to the manifold.

The structure may be an extended partition structure which is extended from a center of the plate-shaped member to the exit port and is thicker than the plate-shaped member to have a thickness that is inserted into the manifold.

Specifically, the plate-shaped member may include a first part which serves as a base and at least two second parts extended from the first part, the second part may be connected to a same side of the first part and extended in a same direction, and the partition structure may be extended from a center of the first part in a same direction as the second part and may be extended and protruded downward.

The structure is a branch structure which splits the coating solution coming out of an injection port at a bottom of the manifold into two branches.

The branch structure may include an extended portion extended downward along a sidewall of the manifold and a bottom portion connected to the extended portion and placed along the bottom of the manifold.

The branch structure may further include a plurality of shim injection ports in the bottom portion.

The plurality of shim injection ports may have an increasing diameter as it goes from center to side.

In another example, the plate-shaped member may include a first part which serves as a base and at least two second parts extended from the first part, the second part may be connected to a same side of the first part and extended in a same direction, the extended portion may be extended and protruded downward from the first part, and the bottom portion may be integrally connected to a lower end of the extended portion.

In this instance, the slot die coater may further include a plurality of shim injection ports in the bottom portion, the shim injection ports having an increasing diameter as it goes from center to side, and the shim injection ports may be circular in shape.

### Advantageous Effects

According to an aspect of the present disclosure, it is possible to ensure the shim offset reproducibility when assembling the shim plate into the slot die coater.

According to another aspect of the present disclosure, it is easy to control the widthwise loading profile.

It is difficult to change the shape of the manifold once it is initially formed. According to still another aspect of the present disclosure, it is possible to reconstruct the manifold area of the slot die coater through the shape of the shim plate without changing the manifold.

As such, according to the present disclosure, it is possible to form the coating solution flow structure that is impossible for the conventional shim plate which is a sheet-shaped member and improve the coating width and loading process capability.

The present disclosure provides the slot die coater including the shim plate including the new functional structure above and below the plate-shaped member, not simply a sheet-shaped member. Preferably, the new functional structure is included below the plate-shaped member to make use of the manifold structure below the shim plate.

Since the corresponding functional structure is mainly related to the manifold, it is possible to ensure the positional reproducibility of the shim plate itself or reconstruct the flow structure in the manifold to form the flow structure that is impossible for the conventional sheet-shaped member and improve the coating width and the quality of the loading process capability.

It is possible to stably form the electrode active material layer using the slot die coater according to the present disclosure.

### DESCRIPTION OF DRAWINGS

The accompanying drawings illustrate an exemplary embodiment of the present disclosure and together with the following detailed description, serve to provide a further understanding of the technical aspect of the present disclosure, and thus, the present disclosure is not construed as being limited to the drawings.
FIG. 1 shows an example of a coating method using a conventional slot die coater.
FIG. 2 is a cross-sectional view of FIG. 1, taken along the line II-II', showing a slot die coater along a MD direction (a movement direction of a current collector).
FIG. 3 is a diagram showing a conventional shim plate.
FIG. 4 is a diagram showing a conventional shim plate offset.
FIG. 5 is a diagram showing a conventional shim.
FIG. 6 is a cross-sectional view of a slot die coater according to an embodiment of the present disclosure.
FIG. 7 is a bottom perspective view showing an example of a shim plate that may be included in a slot die coater of the present disclosure.
FIG. 8 is a perspective view of the shim plate of FIG. 7 and a lower die block.
FIG. 9 is a side view of a lower die block equipped with the shim plate of FIG. 7.
FIG. 10 is a bottom perspective view showing another example of a shim plate that may be included in a slot die coater of the present disclosure.
FIG. 11 is a perspective view of the shim plate of FIG. 10 and a lower die block.
FIG. 12 is a bottom perspective view showing another example of a shim plate that may be included in a slot die coater of the present disclosure.
FIG. 13 is a perspective view of the shim plate of FIG. 12 and a lower die block.
FIG. 14 is a perspective view of another example of a shim plate that may be included in a slot die coater of the present disclosure and a lower die block.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, but should be interpreted based on the meanings and concepts corresponding to the technical aspect of the present disclosure on the basis of the principle that the inventor is allowed to define terms appropriately for the best explanation. Therefore, the embodiments described herein and illustrations in the drawings are just an exemplary embodiment of the present disclosure and do not fully describe the technical aspect of the present disclosure, so it should be understood that a variety of other equivalents and modifications could have been made thereto at the time of filing the patent application.

Like reference numerals indicate like elements. Additionally, in the drawings, the elements are depicted in exaggerated thickness, proportion and dimension for effective description of the technical subject matter.

A slot die coater of the present disclosure is a device having a slot to coat a coating solution on a substrate through the slot. In the following description, the 'substrate' is a current collector and the 'coating solution' is an electrode active material slurry. However, the scope of protection of the present disclosure is not necessarily limited thereto. For example, the substrate may be a porous support for a separator and the coating solution may be an organic matter. That is, where thin film coating is required, any type of substrate and coating solution may be used. In this disclosure, 'front' indicates an exit port side and 'rear' indicates the opposite side.

The present disclosure is aimed at ensuring the shim offset reproducibility of the slot die coater. The present disclosure reconstructs a manifold area of the slot die coater through the shape of a shim plate to form a flow structure that is impossible for the conventional shim plate which is a sheet-shaped member and improve the coating width and loading process capability.

The present disclosure suggests a shim plate including a new functional structure above and below a plate-shaped member, rather than simply a sheet-shaped member. Preferably, the new functional structure is included below the plate-shaped member to make use of the manifold structure below the shim plate.

Since the corresponding functional structure is mainly related to the manifold, it is possible to ensure the positional reproducibility of the shim plate itself or reconstruct the flow structure in the manifold to form the flow structure that is impossible for the conventional shim plate which is a sheet-shaped member and improve the coating width and the quality of the loading process capability.

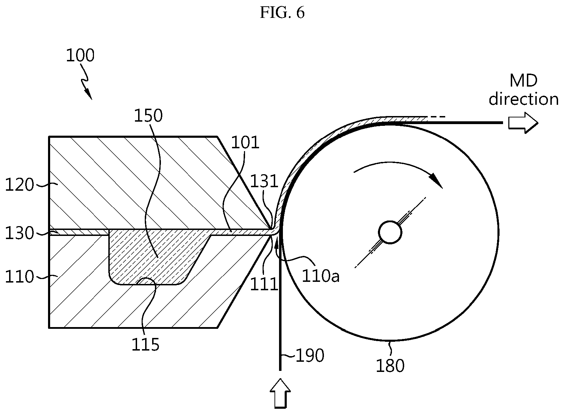

FIG. 6 is a cross-sectional view of the slot die coater according to an embodiment of the present disclosure.

The slot die coater 100 of the present disclosure includes a lower die block 110 and an upper die block 120. A shim plate 130 is present between the lower die block 110 and the upper die block 120 to form a slot 101 therebetween.

The lower die block 110 includes a manifold 115. The manifold 115 accommodates a coating solution 150. The slot die coater 100 delivers and coats the coating solution 150 on a substrate 190 through an exit port 101a in communication with the slot 101.

In addition to the lower die block 110 and the upper die block 120, the slot die coater 100 may further include another die block. The shim plate 130 may be included every two die blocks to form two or more slots. The lower die block 110 and the upper die block 120 are named on the basis of the shim plate 130, and in the case of a larger number of die blocks, the lower die block 110 or the upper die block 120 may become an intermediate die block.

Meanwhile, in FIG. 6, the slot die coater 100 is installed such that the delivery direction (X direction) of the coating solution or the electrode active material slurry is almost horizontal (almost ± 5°). However, the present disclosure is not limited thereto, and for example, the slot die coater 100 may be a vertical die type such that the delivery direction of the electrode active material slurry is the upward direction (Y direction).

The slot 101 is formed in an area of contact between the two die blocks 110, 120. Here, the shim plate 130 is present between the die blocks 110, 120 to form a gap that becomes the slot 101 corresponding to a passage along which the coating solution 150 may flow. The thickness of the shim plate 130 determines the vertical width (Y direction, a slot gap) of the slot 101.

The shim plate 130 is characterized by including a plate-shaped member having an open portion that is cut in at least an area to determine the coating width of the coating layer on the substrate 190, and a structure that protrudes from the plate-shaped member and is inserted into the manifold 115, and the structure may be integral to the plate-shaped member. The structures will be described in more detail below.

The shim plate 130 has the open portion that is cut in an area, and may be present at the remaining area except one side among the edges of the facing surface of each of the die blocks 110, 120. Accordingly, the exit port 101a through which the coating solution 150 exits is present between the die lips 111, 131 respectively at the front ends of the die blocks 110, 120. The exit port 101a may be formed by the gap between the die lips 111, 131.

For reference, the shim plate 130 acts as a gasket to prevent the coating solution 150 from leaking through the gap between the two die blocks 110, 120 except the area in which the exit port 101a is present, and is preferably made of a material having sealability.

According to the description, any one of the two die blocks 110, 120 includes the manifold 115 having a predetermined depth, and the manifold 115 is in communication with the slot 101. In the invention, the manifold 115 is included in the lower die block 110. Although not shown, the manifold 115 is connected to a coating solution feed chamber (not shown) installed outside with a feed pipe and is supplied with the coating solution 150. When the manifold 115 is fully filled with the coating solution 150, the flow of the coating solution 150 is guided along the slot 101 and leaves the exit port 101a.

At the rear of the manifold 115, the lower surface of the upper die block 110 and the upper surface of the shim plate 130 may be coupled to each other without a gap, and the upper surface of the lower die block 120 and the lower surface of the shim plate 130 may be coupled to each other without a gap. Also in front of the manifold 115, the lower surface of the upper die block 110 and the upper surface of the shim plate 130 may be coupled to each other without a gap, and the upper surface of the lower die block 120 and the lower surface of the shim plate 130 may be coupled to each other without a gap. Through this, the coating solution 150 flows only in the slot 101 defined by the shim plate 130.

According to the slot die coater 100 having this configuration, while the substrate 190 to be coated is being moved by the rotation of a rotatable coating roll 180 disposed at the front side of the slot die coater 100, the coating solution 150 may be delivered and continuously coated in contact with the surface of the substrate 190. Alternatively, pattern coating may be intermittently formed on the substrate 190 by supplying the coating solution 150 and stopping the supply in an alternating manner.

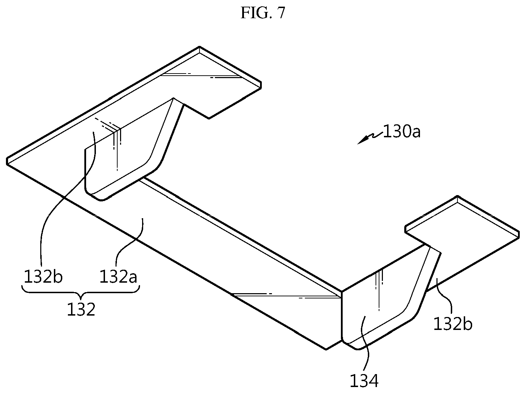

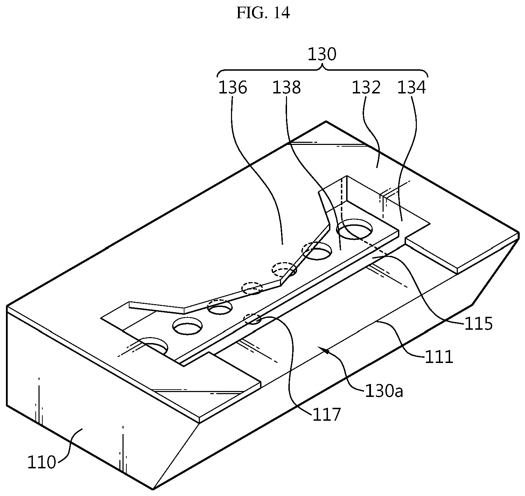

Here, the shim plate 130 determines the coating width of the coating layer on the substrate 190, and according to the present disclosure, is characterized by including the plate-shaped member and the structure. An embodiment of the structure may include those described with reference to FIGS. 7 to 14. FIGS. 7 to 14 are diagrams for describing the shim plates according to various embodiments that may be included in the slot die coater of the present disclosure. The structure is intended to realize the above-mentioned functional structure and may come in three types as shown in FIGS. 7, 10 and 12, and these structures may be used singly or in various combinations. For example, FIG. 14 shows a combination of the three structures.

The conventional shim plate is a sheet-shaped member and corresponds to a 2-dimensional (2D) planar structure, while the present disclosure further includes a structure above and/or below the plate-shaped member that serves as the base of the shim plate, preferably extended into the manifold, and thus has a 3-dimensional (3D) stereoscopic structure. In particular, the 3D stereoscopic structure is different from a 3D stereoscopic structure that is maintained during the action of a deformation force applied to parts of the shim plate of the 2D planar structure and returns to the 2D planar structure when the deformation force is removed. The 3D stereoscopic structure is formed by the shape of the shim plate itself, and there is no deformation of the shim plate before and after coupling the shim plate to the slot die coater.

The shim plate 130 may be made of plastics or metals, but the present disclosure is not limited thereto. The shim plate 130 may be, for example, a resin sheet of Teflon, polyester or the like, or a metal sheet of copper, aluminum or the like. The shim plate 130 may be coupled and fixed to at least one of the two die blocks 110, 120, for example, through a screw, but the present disclosure is not limited thereto.

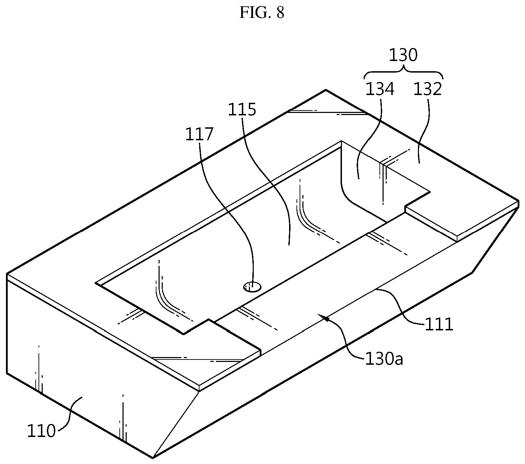

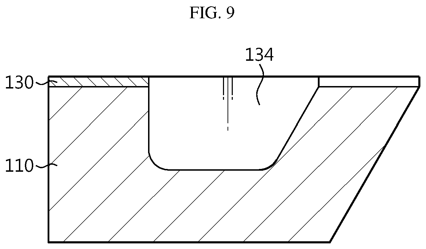

First, FIG. 7 is a bottom perspective view showing an example of the shim plate that may be included in the slot die coater of the present disclosure. FIG. 8 is a perspective view of the shim plate of FIG. 7 and the lower die block. FIG. 9 is a side view of the lower die block equipped with the shim plate of FIG. 7.

Referring to FIGS. 7 to 9, the shim plate 130 includes a plate-shaped member 132 including the open portion 130a that is cut in at least an area to determine the coating width of the coating layer on the substrate 190 and a side structure 134 that protrudes from the plate-shaped member 132 and is inserted into the manifold 115. The upper surface of the shim plate 130 or the surface in contact with the upper die block 110 may be flat, and the side structure 134 may protrude from parts of the lower surface of the shim plate 130 or the surface in contact with the lower die block 120.

The side structure 134 ensures the positional reproducibility of the shim plate 130 itself. The reference number 117 is an injection port through which the electrode active material slurry is supplied from a feeder and is present at the bottom center of the manifold 115.

The side structure 134 may be inserted into two ends of the manifold 115 in an area of contact with the manifold 115 at two ends of the plate-shaped member 132, thereby ensuring the positional reproducibility of the shim plate 130. The side structure 134 may protrude from the plate-shaped member 132 and be inserted into the two ends of the manifold 115 in the area of contact with the manifold 115 at the two ends of the plate-shaped member 132.

The plate-shaped member 132 may include a first part 132a that serves as the base and at least two second parts 132b extended from the first part 132a. The first part 132a is a part of the shim plate 130 that is placed at the rear side of the lower die block 120. For the shim plate 130 disposed at the remaining area except one side among the edges of the facing surface of each of the upper die block 110 and the lower die block 120, the number of second parts 132b is at least two. In this embodiment, two second parts 132b are shown by way of illustration. The open portion 130a is present between the two adjacent second parts 132b. As the number of second parts 132b increases, two or more coating layers may be formed side by side on the substrate 190. That is, stripe pattern coating may be formed. The present disclosure is not limited by the number of second parts 132b.

The second part 132b is connected to the same side of the first part 132a and extended in the same direction. The second part 132b is a part of the shim plate 130 that is extended to the front side of the lower die block 120. The side structure 134 is extended and protruded downward from the inner sidewall of the second part 132b close to the manifold 115. The second part 132b and the side structure 134 may be integrally formed. That is, there is no gap or spacing between the second part 132b and the side structure 134. Accordingly, it is possible to prevent the unnecessary flow of the coating solution between the side structure 134 and the second part 132b. For example, the plate-shaped member 132 is a 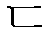 -shaped plate-shaped member and may have a similar shape to the conventional shim plate described in FIG. 3. The shim plate 130 of the present disclosure includes the plate-shaped member 132 and further includes the side structure 134 that protrudes downward from the plate-shaped member 132 and is inserted into the manifold 115 below the shim plate 130 at the location close to two sidewalls (placed on two sides in the widthwise direction of the slot die coater) of the manifold 115. With the side structure 134 inserted into the manifold 115, the accuracy in the assembly of the shim plate 130 increases. Additionally, when it is designed such that the end of the shim plate 130 is offset from the die lip 111, the shim plate 130 is always placed at the same location, and thus, the originally designed offset may be always maintained. Accordingly, it is possible to ensure the shim offset reproducibility when assembling the shim plate 130 into the slot die coater 100.

The side structure 134 may have the same shape as the cross-sectional shape of the manifold 115 to fit into the manifold 115 including the bottom of the manifold 115 to fix the position and prevent the unnecessary flow of the coating solution near the side structure 134. In an example, in case in which the manifold 115 is semi-circular in cross section, the side structure 134 may have a semi-circular shape to match it. In another example, in case in which the manifold 115 is trapezoidal in cross section, the side structure 134 may have a trapezoidal shape to match it.

The plate-shaped member 132 and the side structure 134 may be an integrally formed structure. That is, the side structure 134 is not formed by adding or attaching another member to the plate-shaped member 132, and may be integrally formed when fabricating the shim plate 130. The plate-shaped member 132 and the side structure 134 are seamlessly connected. Accordingly, the fabrication process is straightforward, there is no need to consider and manage the coupling strength between the plate-shaped member 132 and the side structure 134 to be considered in case in which the plate-shaped member 132 and the side structure 134 are separate structures, and it is structurally strong. In addition, it is possible to prevent the slurry from unnecessarily staying in between the plate-shaped member 132 and the side structure 134.

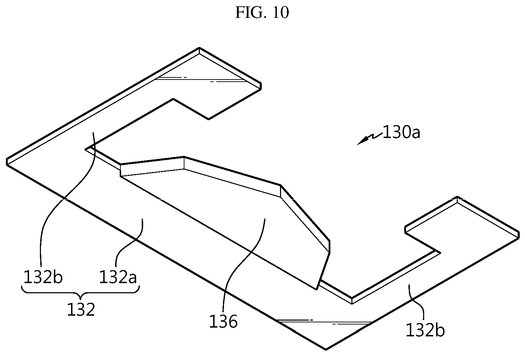

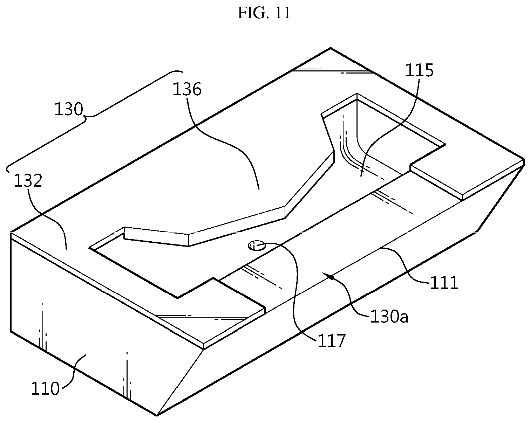

FIG. 10 is a bottom perspective view showing another example of the shim plate that may be included in the slot die coater of the present disclosure. FIG. 11 is a perspective view of the shim plate of FIG. 10 and the lower die block.

The structure that will be described in FIGS. 10 and 11 is a partition structure extended below the plate-shaped member.

Referring to FIGS. 10 and 11, the shim plate 130 includes the plate-shaped member 132 having the open portion 130a that is cut in at least an area to determine the coating width of the coating layer coated on the substrate 190, and the partition structure 136 protruded from the plate-shaped member 132 and inserted into the manifold 115. The partition structure 136 is extended from the center of the plate-shaped member 132 to the exit port 101a, and has a sufficient thickness to be inserted into the manifold 115. In particular, the partition structure 136 is thicker than the plate-shaped member 132. Compared to the shape of the conventional shim 50' described with reference to FIG. 5, the partition structure 136 is extended into the manifold 115 to have a predetermined thickness, and thus the partition structure 136 may be referred to as a reinforced shim.

In the same way as the description made with reference to FIG. 7, the plate-shaped member 132 includes the first part 132a that serves as the base and the second parts 132b extended from the first part 132a. The partition structure 136 is extended from the center of the first part 132a in the same direction as the second parts 132b and is extended and protruded downward. The first part 132a and the partition structure 136 may be integrally formed. That is, there is no gap or spacing between the first part 132a and the partition structure 136. Accordingly, it is possible to prevent the unnecessary flow of the coating solution between the partition structure 136 and the first part 132a.

In the conventional shim 50', the shim plate 50 and the sheet-shaped portion 52 have the same thickness. That is, the upper surface or the lower surface of the shim 50' is flat. The shim 50' is simply used to change the flow of the slurry to control the loading quantity. By contrast, the partition structure 136 of the shim plate 130 of the present disclosure may be thicker than the plate-shaped member 132, and may protrude from the plate-shaped member 132, and accordingly have a larger mass. Accordingly, the partition structure 136 has higher strength and includes a step that is stuck in the step of the manifold 115, and thus in case that the partition structure 136 is placed in a situation in which the partition structure 136 is subjected to a force in any direction, it is possible to prevent deformation or damage and fix the position. As described above, the partition structure 136 has higher structural strength.

The partition structure 136 provides the flow rate adjustment function to the shim plate 130. The partition structure 136 may protrude toward the exit port 101a to the largest extent at the center as shown. With respect to the center of the partition structure 136, the central flow channel may be narrower than the two side flow channels. Accordingly, the pressure at the center increases while the coating solution 150 passes through the shim plate 130, and the coating solution 150 moves to the two sides along the partition structure 136. The partition structure 136 may have a polygonal structure having slopes as shown, and may have a gently round structure, and the shape may be variously adjusted according to the properties of the coating solution and the process conditions. According to the shim plate 130 including the partition structure 136, it is easy to control the widthwise loading profile.

The plate-shaped member 132 and the partition structure 136 may be an integrally formed structure. That is, the partition structure 136 is not formed by adding or attaching another member to the plate-shaped member 132, and may be integrally formed when fabricating the shim plate 130. The plate-shaped member 132 and the partition structure 136 are seamlessly connected. Accordingly, the fabrication process is straightforward, there is no need to consider and manage the coupling strength between the plate-shaped member 132 and the partition structure 136 to be considered in case in which the plate-shaped member 132 and the partition structure 136 are separate structures, and it is structurally strong. In addition, it is possible to prevent the slurry from unnecessarily staying in between the plate-shaped member 132 and the partition structure 136.

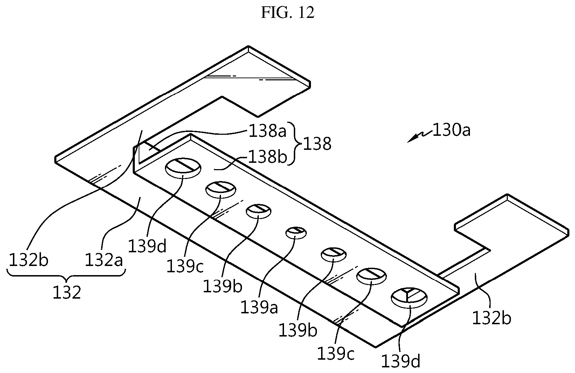

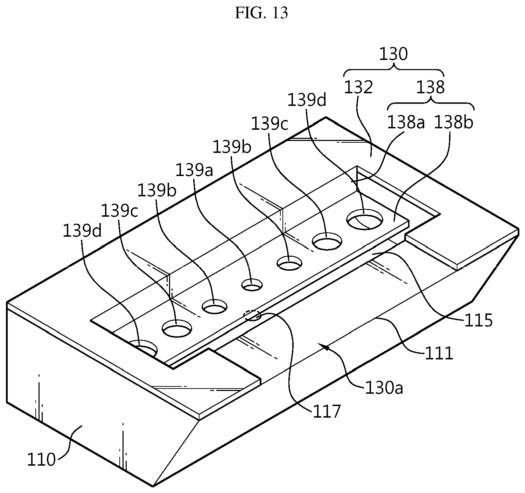

FIG. 12 is a bottom perspective view showing another example of the shim plate that may be included in the slot die coater of the present disclosure, and FIG. 13 is a perspective view of the shim plate of FIG. 12 and the lower die block. The description that will be made in FIGS. 12 and 13 corresponds to the entire flow channel reconstruction of the manifold.

Referring to FIGS. 12 and 13, the shim plate 130 includes the plate-shaped member 132 having the open portion 130a that is cut in at least an area to determine the coating width of the coating layer coated on the substrate 190, and a branch structure 138 protruded from the plate-shaped member 132 and inserted into the manifold 115. The branch structure 138 splits the coating solution coming out of the injection port 117 formed at the bottom of the manifold 115 into two branches.

As shown in FIGS. 3 to 5, in the conventional manifold 38, the injection port 60 is present at the bottom center. Due to the position of the injection port 60, in the conventional art, in many cases, loading at the center is high. In the present disclosure, to solve this problem, the branch structure 138 is extended into the manifold 115 and splits the coating solution coming out of the injection port 117 into two branches to guide the movement of the coating solution along the branch structure 138 to perform control to prevent the increase in loading at any one side.

The branch structure 138 includes an extended portion 138a extended downward along the sidewall of the manifold 115 and a bottom portion 138b connected to the extended portion 138a and placed along the bottom of the manifold 115. The bottom portion 138b includes a plurality of shim injection ports 139a, 139b, 139c, 139d having an increasing diameter as it goes from center to side.

In the same way as description made with reference to FIG. 7, the plate-shaped member 132 includes the first part 132a serving as the base and the second parts 132b extended from the first part 132a. The extended portion 138a may be extended and protruded downward from the first part 132a and the bottom portion 138b may be integrally connected to the lower end of the extended portion 138a. The shim injection ports 139a, 139b, 139c, 139d may be, for example, circular in shape.

The first part 132a and the extended portion 138a may be integrally formed. That is, there is no gap or spacing between the first part 132a and the extended portion 138a. Accordingly, it is possible to prevent the unnecessary flow of the coating solution between the extended portion 138a and the first part 132a.

It is possible to prevent the concentrated flow at the center close to the injection port 117 by guiding the movement of the coating solution from the existing injection port 117 to the new shim injection ports 139a, 139b, 139c, 139d. It is possible to reconstruct the flow channel through simple adjustment of the shim plate 130 without changing the structure of the manifold 115, and fix the position of the shim plate 130 more firmly due to the branch structure 138 inserted into the manifold 115.

It is difficult to change the shape of the manifold 115 once it is initially formed. According to the present disclosure, it is possible to reconstruct the manifold 115 area of the slot die coater 100 through the shim plate 130 including the branch structure 138 without changing the manifold 115.

FIG. 14 shows the shim plate 130 including all the three structures 134, 136, 138 described above. The shim plate 130 may be formed by combining the side structure 134 of FIG. 7 with the branch structure 138 of FIG. 12, or combining the side structure 134 of FIG. 7 with the partition structure 136 of FIG. 10, or combining the partition structure 136 of FIG. 10 with the branch structure 138 of FIG. 12, as necessary.

It is possible to stably form electrode active material layers using the slot die coater 100 and its variations. For example, the slot die coater 100 may be used to coat positive electrode active material slurries to manufacture positive electrodes of secondary batteries.

The positive electrode includes a current collector and a positive electrode active material layer on the surface of the current collector. The current collector may include electrically conductive materials, for example, Al and Cu, and a suitable one may be used according to the polarity of the current collector electrode known in the field of secondary batteries. The positive electrode active material layer may further include at least one of a plurality of positive electrode active material particles, a conductive material or a binder. Additionally, the positive electrode may further include various types of additives to supplement or improve the electrical and chemical properties.

The active material is not limited to a particular type and may include any type of active material that can be used for positive electrode active materials of lithium ion secondary batteries. Its non-limiting examples may include at least one of layered compounds or compounds with one or more transition metal substitution such as lithium manganese composite oxide (LiMn₂O₄, LiMnO₂), lithium cobalt oxide (LiCoO₂), lithium nickel oxide (LiNiO₂); lithium manganese oxide of formula Li₁₊ₓMn₂₋ₓO₄ (x is 0 to 0.33), LiMnO₃, LiMn₂O₃, LiMnO₂; lithium copper oxide (Li₂CuO₂); vanadium oxide, for example, LiV₃O₈, LiV₃O₄, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 to 0.3); lithium manganese composite oxide represented by formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); LiMn₂O₄ with partial substitution of alkali earth metal ion for Li in the formula; disulfide compounds; or Fe₂(MoO₄)₃. In the present disclosure, the positive electrode may include a solid electrolyte material, for example, at least one of a polymer-based solid electrolyte, an oxide-based solid electrolyte or a sulfide-based solid electrolyte.

The conductive material may be typically added in an amount of 1 wt% to 20 wt% based on the total weight of the mixture including the active material. The conductive material is not limited to a particular type, and may include any material having conductive properties without causing any chemical change to the corresponding battery, for example, at least one selected from graphite, for example, natural graphite or artificial graphite; carbon black, for example, carbon black, acetylene black, ketjen black, channel black, furnace black, lamp black, thermal black; conductive fibers, for example, carbon fibers or metal fibers; metal powder, for example, carbon fluoride, aluminum and nickel powder; conductive whiskers, for example, zinc oxide and potassium titanate; conductive metal oxide, for example, titanium oxide; and conductive materials, for example, polyphenylene derivatives.

The binder is not limited to a particular type and may include any material which assists in binding the active material and the conductive material together and binding to the current collector, for example, polyvinylidene fluoride polyvinylalcohol, carboxymethylcellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene butadiene rubber, fluoro rubber and a variety of copolymers thereof. The binder may be typically included in the range of 1 wt% to 30 wt% or 1 wt% to 10 wt% based on 100 wt% of the electrode layer.

The slot die coater 100 of the present disclosure may be used to coat negative electrode active material slurries to manufacture negative electrodes of secondary batteries. The negative electrode includes a current collector and a negative electrode active material layer on the surface of the current collector. The negative electrode active material layer may further at least one of a plurality of negative electrode active material particles, a conductive material or a binder. Additionally, the negative electrode may further include a variety of additives to supplement or improve the electrical and chemical properties.

The negative electrode active material may include carbon materials, for example, graphite, amorphous carbon, diamond-like carbon, fullerene, carbon nanotubes and carbon nanohorns, lithium metal materials, alloy-based materials, for example, silicon or tin alloy based materials, oxide-based materials, for example, Nb₂O₅, Li₅Ti₄O₁₂, TiO₂, or a composite thereof. For the details of the conductive material, the binder and the current collector of the negative electrode, reference may be made to the description of the positive electrode.

The active material slurry including the positive electrode active material or the negative electrode active material has very high viscosity. For example, the viscosity may be 1000 cps or more. The viscosity of the active material slurry used to form electrodes of secondary batteries may be 2000 cps to 30000 cps. For example, the viscosity of the negative electrode active material slurry may be 2000 cps to 4000 cps. The viscosity of the positive electrode active material slurry may be 8000 cps to 30000 cps. Since it is necessary to coat the coating solution having the viscosity of 1000 cps or more, the slot die coater 100 of the present disclosure is different in structure from devices for coating any other coating solution having lower viscosity, for example, an ordinary resin solution such as a photosensitive emulsion, a magnetic solution, an antireflection or antiglare solution, a solution for enlarging the field of view and a pigment solution for a color filter, and cannot be arrived at by design modification. Since the slot die coater 100 of the present disclosure is, for example, designed to coat the active material slurry comprising the active material having the average particle size of about 10 µm, its structure is different from those of devices for coating any other coating solution including no particles having the above-described particle size, and cannot be arrived at by design modification. The slot die coater 100 of the present disclosure is the optimal coater for the manufacture of electrodes.

While the present disclosure has been hereinabove described with respect to a limited number of embodiments and drawings, the present disclosure is not limited thereto, and it will be apparent that a variety of changes and modifications may be made by those skilled in the art within the technical aspect of the present disclosure and the appended claims and their equivalent scope.

**[Description of Reference Numerals]**

| | | | |
|---|---|---|---|
| 100: | Slot die coater | 110: | Upper die block |
| 115: | Manifold | 117: | Injection port |
| 120: | Lower die block | 130: | Shim plate |
| 132: | Plate-shaped member | 134: | Side structure |
| 136: | Partition structure | 138: | Branch structure |
| 138a: | Extended portion | 138b: | Bottom portion |
| 139a, 139b, 139c, 139d: | Shim injection port | | |
| 150: | Coating solution | 180: | Coating roll |
| 190: | Substrate | | |

## Claims

1. A slot die coater (100), comprising:
a lower die block (120) and an upper die block (110);
a shim plate (130) interposed between the lower die block (120) and the upper die block (110) to form a slot therebetween; and
a manifold (115) disposed in the lower die block (120), the manifold (115) being configured to accommodate a coating solution (150),
wherein the coating solution (150) is configured to be delivered and coated on a substrate (190) through an exit port in communication with the slot, and
wherein the shim plate (130) includes a plate-shaped member (132) having an open portion which is cut in at least an area to determine a coating width of a coating layer coated on the substrate (190), and a structure protruding from the plate-shaped member (132) and inserted into the manifold (115),
**characterized in that** the structure is a branch structure (138) for splitting the coating solution (150) coming out of an injection port (117) at a bottom of the manifold (115) into two branches.

2. The slot die coater (100) according to claim 1, wherein the structure is integral to the plate-shaped member (132).

3. The slot die coater (100) according to claim 1, wherein at rear of the manifold (115) and in front of the manifold (115), a lower surface of the upper die block (110) and an upper surface of the shim plate (130) are coupled to each other without a gap, and an upper surface of the lower die block (120) and a lower surface of the shim plate (130) are coupled to each other without a gap.

4. The slot die coater (100) according to claim 1, wherein an upper surface of the shim plate (130) is flat and the structure protrudes in part of a lower surface of the shim plate (130).

5. The slot die coater (100) according to claim 1, wherein the shim plate (130) further includes a structure which is a side structure (134) which is inserted into two ends of the manifold (115) in an area of contact with the manifold (115) at two ends of the plate-shaped member (132) to ensure positional reproducibility of the shim plate (130).

6. The slot die coater (100) according to claim 5, wherein the side structure (134) has a same shape as a cross-sectional shape of the manifold (115) to fit into the manifold (115) including a bottom of the manifold (115).

7. The slot die coater (100) according to claim 5, wherein the plate-shaped member (132) includes a first part which serves as a base and at least two second parts extended from the first part, the second part is connected to a same side of the first part and extended in a same direction, and the side structure (134) is extended and protruded downward from an inner sidewall of the second part close to the manifold (115).

8. The slot die coater (100) according to any one of claims 1 or 5, wherein the shim plate (130) further includes a structure which is an extended partition structure (136) which is extended from a center of the plate-shaped member (132) to the exit port and is thicker than the plate-shaped member (132) to have a thickness that is inserted into the manifold (115).

9. The slot die coater (100) according to claim 8, wherein the plate-shaped member (132) includes a first part which serves as a base and at least two second parts extended from the first part, the second part is connected to a same side of the first part and extended in a same direction, and the partition structure (136) is extended from a center of the first part in a same direction as the second part and is extended and protruded downward.

10. The slot die coater (100) according to claim 1, wherein the branch structure (138) includes an extended portion (138a) extended downward along a sidewall of the manifold (115) and a bottom portion (138b) connected to the extended portion (138a) and placed along the bottom of the manifold (115).

11. The slot die coater (100) according to claim 10, further comprising:
a plurality of shim injection ports (139a, 139b, 139c, 139d) in the bottom portion (138b).

12. The slot die coater (100) according to claim 11, wherein the plurality of shim injection ports (139a, 139b, 139c, 139d) has an increasing diameter as it goes from center to side.

13. The slot die coater (100) according to claim 10, wherein the plate-shaped member (132) includes a first part which serves as a base and at least two second parts extended from the first part, the second part is connected to a same side of the first part and extended in a same direction, the extended portion (138a) is extended and protruded downward from the first part, and the bottom portion (138b) is integrally connected to a lower end of the extended portion (138a).

14. The slot die coater (100) according to claim 13, further comprising:
a plurality of shim injection ports (139a, 139b, 139c, 139d) in the bottom portion (138b), the shim injection ports (139a, 139b, 139c, 139d) having an increasing diameter as it goes from center to side,
wherein the shim injection ports (139a, 139b, 139c, 139d) are circular in shape.

## Patentansprüche

1. Schlitzdüsen-Beschichter (100), umfassend:
einen unteren Düsenblock (120) und einen oberen Düsenblock (110);
eine Distanzplatte (130), welche zwischen dem unteren Düsenblock (120) und dem oberen Düsenblock (110) eingefügt ist, um einen Schlitz dazwischen zu bilden; und
eine Sammelleitung (115), welche in dem unteren Düsenblock (120) angeordnet ist, wobei die Sammelleitung (115) dazu eingerichtet ist, eine Beschichtungslösung (150) aufzunehmen,
wobei die Beschichtungslösung (150) dazu eingerichtet ist, durch eine Ausgangsöffnung in Kommunikation mit dem Schlitz auf ein Substrat (190) geliefert und beschichtet zu werden, und
wobei die Distanzplatte (130) ein plattenförmiges Element (132) umfasst, welches einen offenen Abschnitt aufweist, welcher in wenigstens einem Bereich geschnitten ist, um eine Beschichtungsbreite einer Beschichtungsschicht zu bestimmen, welche auf das Substrat (190) beschichtet wird, sowie eine Struktur, welche von dem plattenförmigen Element (132) vorsteht und in die Sammelleitung (115) eingesetzt ist,
**dadurch gekennzeichnet, dass** die Struktur eine Zweigstruktur (138) zum Aufteilen der Beschichtungslösung (150), welche aus einer Injektionsöffnung (117) an einer Unterseite der Sammelleitung (115) kommt, in zwei Zweige ist.

2. Schlitzdüsen-Beschichter (100) nach Anspruch 1, wobei die Struktur integral mit dem plattenförmigen Element (132) ist.

3. Schlitzdüsen-Beschichter (100) nach Anspruch 1, wobei an einer Hinterseite der Sammelleitung (115) und vor der Sammelleitung (115) eine untere Fläche des oberen Düsenblocks (110) und eine obere Fläche der Distanzplatte (130) miteinander ohne einen Abstand gekoppelt sind, und eine obere Fläche des unteren Düsenblocks (120) und eine untere Fläche der Distanzplatte (130) miteinander ohne einen Abstand gekoppelt sind.

4. Schlitzdüsen-Beschichter (100) nach Anspruch 1, wobei eine obere Fläche der Distanzplatte (130) eben ist und die Struktur teilweise von einer unteren Fläche der Distanzplatte (130) vorsteht.

5. Schlitzdüsen-Beschichter (100) nach Anspruch 1, wobei die Distanzplatte (130) ferner eine Struktur umfasst, welche eine Seitenstruktur ist, welche in zwei Enden der Sammelleitung (115) in einem Bereich eines Kontakts mit der Sammelleitung (115) an zwei Enden des plattenförmigen Elements (132) eingesetzt ist, um eine positionelle Reproduzierbarkeit der Distanzplatte (130) sicherzustellen.

6. Schlitzdüsen-Beschichter (100) nach Anspruch 5, wobei die Seitenstruktur (134) eine gleiche Form wie eine Querschnittsform der Sammelleitung (115) aufweist, um in die Sammelleitung (115) einzupassen, einschließlich einer Unterseite der Sammelleitung (115).

7. Schlitzdüsen-Beschichter (100) nach Anspruch 5, wobei das plattenförmige Element (132) einen ersten Teil, welcher als eine Basis dient, und wenigstens zwei zweite Teile umfasst, welche sich von dem ersten Teil erstrecken, der zweite Teil mit einer gleichen Seite des ersten Teils verbunden und in einer gleichen Richtung erstreckt ist, und die Seitenstruktur (134) nach unten von einer inneren Seitenwand des zweiten Teils nahe zu der Sammelleitung (115) erstreckt und vorstehend ist.

8. Schlitzdüsen-Beschichter (100) nach einem der Ansprüche 1 oder 5, wobei die Distanzplatte (130) ferner eine Struktur umfasst, welche eine erstreckte Unterteilungsstruktur (136) ist, welche von einer Mitte des plattenförmigen Elements (132) zu der Ausgangsöffnung erstreckt ist und dicker als das plattenförmige Element (132) ist, um eine Dicke aufzuweisen, welche in die Sammelleitung (115) eingesetzt ist.

9. Schlitzdüsen-Beschichter (100) nach Anspruch 8, wobei das plattenförmige Element (132) einen ersten Teil, welcher als eine Basis dient, und wenigstens zwei zweite Teile umfasst, welche von dem ersten Teil erstreckt sind, wobei der zweite Teil mit einer gleichen Seite des ersten Teils verbunden und in einer selben Richtung erstreckt ist, und die Unterteilungsstruktur (136) von einer Mitte des ersten Teils in einer gleichen Richtung wie der zweite Teil erstreckt und nach unten erstreckt und vorstehend ist.

10. Schlitzdüsen-Beschichter (100) nach Anspruch 1, wobei die Zweigstruktur (138) einen erstreckten Abschnitt (138a), welcher sich nach unten entlang einer Seitenwand der Sammelleitung (115) erstreckt, und einen unteren Abschnitt (138b) umfasst, welcher mit dem erstreckten Abschnitt (138a) verbunden und entlang der Unterseite der Sammelleitung (115) platziert ist.

11. Schlitzdüsen-Beschichter (100) nach Anspruch 10, ferner umfassend:
eine Mehrzahl von Distanz-Injektionsöffnungen (139a, 139b, 139c, 139d) in dem unteren Abschnitt (138b).

12. Schlitzdüsen-Beschichter (100) nach Anspruch 11, wobei die Mehrzahl von Distanz-Injektionsöffnungen (139a, 139b, 139c, 139d) einen zunehmenden Durchmesser aufweist, wenn sie von einer Mitte zu einer Seite verläuft.

13. Schlitzdüsen-Beschichter (100) nach Anspruch 10, wobei das plattenförmige Element (132) einen ersten Teil, welcher als eine Basis dient, und wenigstens zwei zweite Teile umfasst, welche von dem ersten Teil erstreckt sind, der zweite Teil mit einer gleichen Seite des ersten Teils verbunden und in einer gleichen Richtung erstreckt ist, der erstreckte Abschnitt (138a) nach unten von dem ersten Teil erstreckt und vorstehend ist und der untere Abschnitt (138b) integral mit einem unteren Ende des erstreckten Abschnitts (138a) verbunden ist.

14. Schlitzdüsen-Beschichter (100) nach Anspruch 13, ferner umfassend:
eine Mehrzahl von Distanz-Injektionsöffnungen (139a, 139b, 139c, 139d) in dem unteren Abschnitt (138b), wobei die Distanz-Injektionsöffnungen (139a, 139b, 139c, 139d) einen zunehmenden Durchmesser aufweisen, wenn sie von einer Mitte zu einer Seite verläuft,
wobei die Distanz-Injektionsöffnungen (139a, 139b, 139c, 139d) von kreisförmiger Form sind.

## Revendications

1. Dispositif d'enduction à filière à fente (100), comprenant :
un bloc de filière inférieur (120) et un bloc de filière supérieur (110) ;
une plaque de calage (130) interposée entre le bloc de filière inférieur (120) et le bloc de filière supérieur (110) pour former une fente entre ceux-ci ; et
un collecteur (115) disposé dans le bloc de filière inférieur (120), le collecteur (115) étant configuré pour contenir une solution d'enduction (150),
dans lequel la solution d'enduction (150) est configurée pour être distribuée et enduire un substrat (190) par l'intermédiaire d'un orifice de sortie en communication avec la fente, et
dans lequel la plaque de calage (130) comprend un élément en forme de plaque (132) ayant une portion ouverte qui est découpée dans au moins une zone pour déterminer une largeur d'enduction d'une couche d'enduction enduisant le substrat (190), et une structure faisant saillie depuis l'élément en forme de plaque (132) et insérée dans le collecteur (115),
**caractérisé en ce que** la structure est une structure ramifiée (138) pour diviser la solution d'enduction (150) sortant d'un orifice d'injection (117) au niveau d'un fond du collecteur (115) en deux ramifications.

2. Dispositif d'enduction à filière à fente (100) selon la revendication 1, dans lequel la structure fait partie intégrante de l'élément en forme de plaque (132).

3. Dispositif d'enduction à filière à fente (100) selon la revendication 1, dans lequel, à l'arrière du collecteur (115) et devant le collecteur (115), une surface inférieure du bloc de filière supérieur (110) et une surface supérieure de la plaque de calage (130) sont accouplées l'une à l'autre sans interstice, et une surface supérieure du bloc de filière inférieur (120) et une surface inférieure de la plaque de calage (130) sont accouplées l'une à l'autre sans interstice.

4. Dispositif d'enduction à filière à fente (100) selon la revendication 1, dans lequel une surface supérieure de la plaque de calage (130) est plate et la structure fait saillie en partie depuis une surface inférieure de la plaque de calage (130).

5. Dispositif d'enduction à filière à fente (100) selon la revendication 1, dans lequel la plaque de calage (130) comprend en outre une structure qui est une structure latérale (134) qui est insérée dans deux extrémités du collecteur (115) dans une zone de contact avec le collecteur (115) à deux extrémités de l'élément en forme de plaque (132) pour garantir une reproductibilité de position de la plaque de calage (130).

6. Dispositif d'enduction à filière à fente (100) selon la revendication 5, dans lequel la structure latérale (134) a la même forme qu'une forme en coupe transversale du collecteur (115) pour se loger dans le collecteur (115) y compris un fond du collecteur (115).

7. Dispositif d'enduction à filière à fente (100) selon la revendication 5, dans lequel l'élément en forme de plaque (132) comprend une première partie qui sert de base et au moins deux secondes parties étendues depuis la première partie, la seconde partie est reliée à un même côté de la première partie et étendue dans une même direction, et la structure latérale (134) est étendue et saillante vers le bas depuis une paroi latérale intérieure de la seconde partie proche du collecteur (115).

8. Dispositif d'enduction à filière à fente (100) selon l'une quelconque des revendications 1 ou 5, dans lequel la plaque de calage (130) comprend en outre une structure qui est une structure de séparation (136) étendue qui est étendue depuis un centre de l'élément en forme de plaque (132) jusqu'à l'orifice de sortie et est plus épaisse que l'élément en forme de plaque (132) pour avoir une épaisseur qui est insérée dans le collecteur (115).

9. Dispositif d'enduction à filière à fente (100) selon la revendication 8, dans lequel l'élément en forme de plaque (132) comprend une première partie qui sert de base et au moins deux secondes parties étendues depuis la première partie, la seconde partie est reliée à un même côté de la première partie et étendue dans une même direction, et la structure de séparation (136) est étendue depuis un centre de la première partie dans une même direction que la seconde partie et est étendue et saillante vers le bas.

10. Dispositif d'enduction à filière à fente (100) selon la revendication 1, dans lequel la structure ramifiée (138) comprend une portion étendue (138a) étendue vers le bas le long d'une paroi latérale du collecteur (115) et une portion de fond (138b) reliée à la portion étendue (138a) et placée le long du fond du collecteur (115).

11. Dispositif d'enduction à filière à fente (100) selon la revendication 10, comprenant en outre :
une pluralité d'orifices d'injection de cale (139a, 139b, 139c, 139d) dans la portion de fond (138b).

12. Dispositif d'enduction à filière à fente (100) selon la revendication 11, dans lequel la pluralité d'orifices d'injection de cale (139a, 139b, 139c, 139d) a un diamètre croissant au fur et à mesure qu'elle va du centre vers le côté.

13. Dispositif d'enduction à filière à fente (100) selon la revendication 10, dans lequel l'élément en forme de plaque (132) comprend une première partie qui sert de base et au moins deux secondes parties étendues depuis la première partie, la seconde partie est reliée à un même côté de la première partie et étendue dans une même direction, la portion étendue (138a) est étendue et saillante vers le bas depuis la première partie, et la portion de fond (138b) est reliée d'un seul bloc à une extrémité inférieure de la portion étendue (138a).

14. Dispositif d'enduction à filière à fente (100) selon la revendication 13, comprenant en outre :
une pluralité d'orifices d'injection de cale (139a, 139b, 139c, 139d) dans la portion de fond (138b), les orifices d'injection de cale (139a, 139b, 139c, 139d) ayant un diamètre croissant au fur et à mesure qu'ils vont du centre vers le côté,
dans lequel les orifices d'injection de cale (139a, 139b, 139c, 139d) sont de forme circulaire.
